# EUROPÄISCHE PATENTSCHRIFT

(11) **EP 2 486 313 B1**
(45) Veröffentlichungstag und Bekanntmachung des Hinweises auf die Patenterteilung: **11.11.2015**
(21) Anmeldenummer: 10759887.2
(22) Anmeldetag: 28.09.2010
(51) Int. Cl.: F16K 99/00, B01L 3/00

(54) **MIKROFLUIDISCHE STRUKTUR UND VERFAHREN ZUM POSITIONIEREN EINES FLÜSSIGKEITSVOLUMENS IN EINEM MIKROFLUIDISCHEN SYSTEM**
MICROFLUIDIC STRUCTURE AND METHOD FOR POSITIONING A FLUID VOLUME IN A MICROFLUIDIC SYSTEM
STRUCTURE MICROFLUIDIQUE ET PROCÉDÉ POUR LE POSITIONNEMENT D'UN VOLUME DE LIQUIDE DANS UN SYSTÈME MICROFLUIDIQUE

(30) Priorität: 06.10.2009 DE 102009045405
(43) Veröffentlichungstag der Anmeldung: 15.08.2012
(73) Patentinhaber: Fraunhofer Gesellschaft zur Förderung der angewandten Forschung e.V., 80686 München (DE)
(72) Erfinder: GRANSEE, Rainer, 55257 Budenheim (DE); STROBACH, Xenia, 55118 Mainz (DE); STEIN, Volkmar, 65462 Ginsheim-Gustavsburg (DE); RÖSER, Tina, 56754 Brohl (DE)
(86) Internationale Anmeldenummer: PCT/EP2010/064347
(87) Internationale Veröffentlichungsnummer: WO 2011/042334

(56) Entgegenhaltungen:
- EP-A1- 1 536 228
- WO-A1-2008/149111
- WO-A1-2009/075016
- WO-A1-2010/072546
- US-A1- 2005 161 669
- US-A1- 2008 314 129

## Beschreibung

Mikrofluidische Struktur zum Positionieren eines Flüssigkeitsvolumens in einem mikrofluidischen System mit mehreren Fluidleitungen, von denen in einer ersten Fluidleitung das Flüssigkeitsvolumen zu positionieren ist, und mit einem Ventil zum wahlweisen Verbinden oder Trennen der Fluidleitungen, wobei die erste Fluidleitung ein erstes und ein zweites Ende aufweist, an denen die erste Fluidleitung mit demselben Ventil verbunden ist.

Aus der Schrift US 2005/0056321 A1 ist ein Rückschlagventil bekannt, welches einen Ventilkörper und eine Leitung zur Umgehung des Ventilkörpers aufweist, wenn dieser sich in einer ersten Position befindet. Zweck des Rückschlagventils ist es, in dem Leitungsabschnitt, in den dieses eingebaut ist, nur eine Strömungsrichtung zuzulassen.

Ein einfaches Absperrventil in Form eines Quetschventils in einer mikrofluidischen Struktur gemäß dem Oberbegriff des Anspruchs 1 ist aus S.H. Lee et al., "A polymer lab-on-a-chip for reverse transcription (RT)-PCR based point-of-care clinical diagnostics", Lab Chip, 2008, 8, S. 2121-2127, bekannt.

Die Erfindung bewegt sich auf dem technischen Gebiet der biochemischen oder chemischen Probenaufbereitung und Analyse im mikrofluidischen Maßstab, d.h. insbesondere in sogenannten Lab-On-Chip-Systemen oder Mikrofluidikchips. In solchen Systemen tritt häufig das Problem auf, das DNA/RNA-Material, Proteine, Enzyme, Zellen oder Zellbestandteile, Bakterien oder dergleichen enthaltenden Proben, beispielsweise ein Lysat, genau an einem vorgegebenen Funktionsabschnitt der mikrofluidischen Struktur, beispielsweise einer Reaktions- oder

Analysekammer, zu positionieren und diese während der Reaktion oder Analyse dort zu fixieren.

Das Positionieren eines Flüssigkeitsvolumens, insbesondere eines abgemessenen Flüssigkeitsvolumens, nachfolgend auch Flüssigkeitsplug genannt, setzt zunächst die Bestimmung der Position des Flüssigkeitsvolumens innerhalb der mikrofluidischen Struktur voraus. Dies geschieht mittels zweier, einen ausgewählten Bereich des Funktionsabschnittes einschließender Lichtschranken. Die in Strömungsrichtung erste Lichtschranke oder Eingangslichtschranke detektiert beim Einströmen des Flüssigkeitsplugs zunächst dessen Anfang oder erste Flanke und dann dessen Ende oder zweite Flanke. Die zweite Lichtschranke oder Ausgangslichtschranke detektiert, wenn der Flüssigkeitsplug den ausgewählten Bereich verlässt. Bei umgekehrter Strömungsrichtung kehren die Lichtschranken ihre Funktionalität um.

In vielen Anwendungsfeldern biochemischer oder chemischer Reaktionen, insbesondere Reaktionen mit thermischer Einwirkung, beispielsweise der Polymerase-Kettenreaktion, stellen sich im Laufe der Reaktion variierende Drücke in der Umgebung des Flüssigkeitsplugs ein, die zu einer Wanderung des Flüssigkeitsplugs innerhalb des Funktionsabschnittes führen können. Deshalb besteht ein Problem der Positionierung darin, auch bei anfänglicher genauer Bestimmung der Position den Flüssigkeitsplugs an der gewünschten Stelle in dem System zu halten.

Zu diesem Zweck wird regelungstechnisch eingegriffen, indem der Druck überwacht und die Position des Plugs während der Reaktion bei Bedarf durch aktive Druckveränderung in dem System nachjustiert wird. Diese Vorgehensweise bedarf eines erhöhten regelungstechnischen Aufwands und ist deshalb teuer. Ferner sind mehrere Ventile zur Realisierung der Druckregelung notwendig, die einen erhöhten Platzbedarf auf dem Mikrofluidikchip haben und deshalb die

Funktionsdichte des Chips beeinträchtigen. Ferner ist aus dem zuletzt genannten Grund auch der Fertigungs- und Montageaufwand sehr groß, was den Chips selbst wiederum teuer werden lässt.

Auch kann eine Erwärmung zur (teilweisen) Verdunstung der Flüssigkeit und somit zu einer unerwünschten Volumenänderung führen, die nicht nur die Positionierung erschwert sondern auch die Genauigkeit der Versuchsdurchführung beeinträchtigen kann.

Aufgabe der vorliegenden Erfindung ist es, die vorstehenden Nachteile zu reduzieren und eine kostengünstige mikrofluidische Struktur zum Positionieren eines Flüssigkeitsvolumens in einem mikrofluidischen System bereitzustellen.

Die Aufgabe wird gelöst durch eine mikrofluidische Struktur mit den Merkmalen des Patentanspruchs 1. Vorteilhafte Weiterbildungen sind Gegenstand der Unteransprüche.

Die erfindungsgemäße mikrofluidische Struktur in einem Lab-On-Chip-System zum Positionieren eines Flüssigkeitsvolumens, weist erfindungsgemäß mehrere Fluidleitungen, von denen in einer ersten Fluidleitungen das Flüssigkeitsvolumen zu positionieren ist, und ein Ventil auf, wobei die erste Fluidleitung ein erstes und ein zweites Ende aufweist, an denen die erste Fluidleitung mit demselben Ventil verbunden ist und wobei das Ventil einen ersten Durchgang aufweist, der geeignet ist, das erste und das zweite Ende der ersten Fluidleitung wahlweise zu verbinden oder diese zu trennen und wobei das Ventil (20) eine Absperrstellung aufweist, in der sowohl das erste als auch das zweite Ende (16, 18) der ersten Fluidleitung (10) verschlossen sind, und die erste Fluidleitung (10) eine PCR-Kammer einschließt.

So wird auf einfache apparative Weise mit nur einem Ventil die erste Fluidleitung wahlweise mit dem übrigen mikrofluidischen System zum Zweck des Befüllens und/oder Entleerens verbunden oder ein Kurzschluss der ersten Fluidleitung hergestellt. Aus dem geschlossenen System der ersten Fluidleitung mit dem eingeschlossenen Funktionsabschnitt, können keine Gase oder Dämpfe entweichen. Es kommt deshalb nicht zu Volumenverlusten der eingeschlossenen Flüssigkeit. Genauso wichtig ist der Effekt, dass innerhalb der geschlossenen Fluidleitung überall derselbe Druck wirkt, so dass unabhängig von einer Temperaturänderung in der Umgebung des Flüssigkeitsvolumens auf dieses von beiden Seiten der gleiche Druck einwirkt. Eine aufwendige Regelung zur Positionierung bzw. Positionseinhaltung des Flüssigkeitsplugs kann eingespart werden.

Ein Mikrokanal in Form eines geschlossenen Speicherrings für eine Probe ist beispielsweise aus der US 2007/0248497 A1 bekannt. Dieser Speicherring wird über zwei verschließbare Stichkanäle befüllt. Der Speicherring kann ferner aktive Zonen und eine Umlaufpumpe zu bzw. abführen oder zum Zirkulieren der Probe innerhalb des Speicherrings enthalten.

Im weitesten Sinne offenbart auch die US 2006/0002804 A1 eine Ausführungsform einer mikrofluidischen Anordnung mit einem Ringkanal. Der Ringkanal besteht aus einem Einlasskanal, einem Auslasskanal, einer zwischen dem Einlass- und dem Auslasskanal angeordneten Pumpvorrichtung und einem den Einlass- und den Auslasskanal verbindenden Rückkopplungskanal.

Das Ventil weist eine Absperrstellung auf, in der sowohl das erste als auch das zweite Ende der ersten Fluidleitung verschlössen sind. Wieder kann mit nur einem Ventil und deshalb mit nur einem Steuerbefehl die erste Fluidleitung und der darin befindliche Funktionsabschnitt von der übrigen fluidischen Struktur separiert werden.

Die erste Fluidleitung schließt eine Reaktionskammer als Funktionsabschnitt ein, in der der Flüssigkeitsplug zur Durchführung von Experimenten gefangen gehalten werden soll. Ferner schließt die Fluidleitung vor und hinter der Reaktionskammer bzw. dem Reservoir vorzugsweise jeweils eine Anschlussleitung gleicher Dimension (Querschnitt und Länge) ein. Wird ein eingeschlossenes Flüssigkeitsvolumen in einer solchen ersten Fluidleitung erwärmt und baut sich resultierend aus der Erwärmung und/oder einer Verdunstung ein erhöhter Druck auf, so wirkt auf den Plug aufgrund der gleichen davor und dahinter eingeschlossenen Gasvolumina von beiden Seiten dieselbe Kraft. Auch bei dieser Konfiguration ist deshalb gewährleistet, dass sich der Flüssigkeitsplug bei Druckänderung innerhalb des geschlossenen Systems nicht verschiebt. Eine aufwendige Regelung zur Positionierung des Flüssigkeitsplugs kann wiederum eingespart werden. Ein Flüssigkeitsverlust durch Verdunstung aus der ersten Leitung ist ebenfalls ausgeschlossen.

Bevorzugt weist das Ventil einen zweiten Durchgang auf, der geeignet ist, das erste Ende der ersten Fluidleitung wahlweise mit einer zweiten Fluidleitung zu verbinden oder diese zu trennen. Die Verbindung der zweiten Fluidleitung über den zweiten Durchgang mit der ersten Fluidleitung kann wie nachstehend erläutert dem Befüllen der ersten Fluidleitung mit einem Flüssigkeitsvolumen oder einem Entleeren der ersten Fluidleitung in die zweite Fluidleitung dienen.

In einer weiteren vorteilhaften Ausgestaltung weist das Ventil einen dritten Durchgang auf, der relativ zu dem ersten Durchgang so angeordnet ist, dass er das zweite Ende der ersten Fluidleitung mit einer dritten Fluidleitung verbindet, während der erste Durchgang das erste Ende der ersten Fluidleitung mit der zweiten Fluidleitung verbindet. Auf diese Weise bildet die erste Fluidleitung einen Durchgangskanal.

Die in dieser Schrift getroffene Unterscheidung zwischen einer zweiten und dritten Fluidleitung sowie des ersten, zweiten und dritten Durchganges ist funktional zu verstehen. Trotz sprachlicher Unterscheidung kann damit dieselbe körperliche Fluidleitung bzw. derselbe körperliche Durchgang bezeichnet sein. Beispielsweise kann der funktional erste Durchgang, der die erste Fluidleitung an Ihren Enden mit sich selbst verbindet in einer anderen Ventilstellung als zweiter Durchgang zum Verbinden der ersten Fluidleitung mit der zweiten Fluidleitung dienen. Ebenso können die zweite Fluidleitung, die zum Befüllen der ersten Fluidleitung dient, und die dritte Fluidleitung, die zum Entleeren dient, zu einem anderen Zeitpunkt bei umgekehrter Fließrichtung funktional ihre Rollen und damit ihre Bezeichnung tauschen.

Ein Verfahren zum Positionieren eines Flüssigkeitsvolumens in einem mikrofluidischen System, insbesondere in einen Lab-On-Chip-System, mit mehreren Fluidleitungen, und mit einem Ventil, wobei die erste Fluidleitung ein erstes und ein zweites Ende aufweist, an denen die erste Fluidleitung mit demselben Ventil verbunden ist, sieht die folgenden Schritte vor:
a) Verbinden einer zweiten Fluidleitung über einen zweiten Durchgang in dem Ventil mit der ersten Fluidleitung,
b) Befüllen der ersten Fluidleitung mit einem Flüssigkeitsvolumen,
c) Kurzschließen der ersten Fluidleitung durch Verbinden des ersten und des zweiten Endes über einen ersten Durchgang in dem Ventil oder Absperren der ersten Fluidleitung durch Verschließen des ersten und des zweiten Endes mittels des Ventils.

Wie vorstehend erläutert wird derart wahlweise ein Kurzschluss der ersten Fluidleitung hergestellt, der Volumenverluste der eingeschlossenen Flüssigkeit und ein Wandern des eingeschlossenen Flüssigkeitsvolumens verhindert. Dasselbe Ziel wird, wie ebenfalls vorstehend erläutert, alternativ dadurch erreicht, dass die erste Fluidleitung an beiden Enden durch das Ventil verschlossen wird. Eine Reaktionskammer oder ein Reservoir und jeweils eine Anschlussleitung gleicher Dimension davor und dahinter verhindern eine Verschiebung des Flüssigkeitsplugs innerhalb der Reaktionskammer. Auch wird bei der geschlossenen Konfiguration jeglicher Volumenverlust aufgrund von Verdunstung ausgeschlossen.

Bei einem Verfahren schließen sich dem Kurzschließen dem Absperren der ersten Fluidleitung gemäß Schritt c) die Schritte
d) Verbinden der zweiten Fluidleitung über den zweiten Durchgang in dem Ventil mit der ersten Fluidleitung,
e) Entleeren der ersten Fluidleitung in die zweite Fluidleitung.
oder die Schritte
d') Verbinden einer dritten Fluidleitung über einen dritten Durchgang in dem Ventil mit der ersten Fluidleitung,
e') Entleeren der ersten Fluidleitung in die dritte Fluidleitung
an.

Nach Schritt c) und vor Schritt d) bzw. Schritt d') wird das Flüssigkeitsvolumen in der ersten Fluidleitung regelmäßig einer Reaktion oder Untersuchung unterzogen. Beispielsweise eine Polymerase-Kettenreaktion (PCR) und/oder Reverse Transkriptase (RT) an.

Weitere Aufgaben, Merkmale und Vorteile der Erfindung werden nachfolgend anhand von Ausführungsbeispielen mit Hilfe der Zeichnungen näher erläutert.

Es zeigen:
- Figur 1: einen einfachen schematischen Aufbau der erfindungsgemäßen mikrofluidischen Struktur und
- Figur 2: einen MLPA-Mikrofluidikchip mit einer anderen Ausführungsform der erfindungsgemäßen mikrofluidischen Struktur.

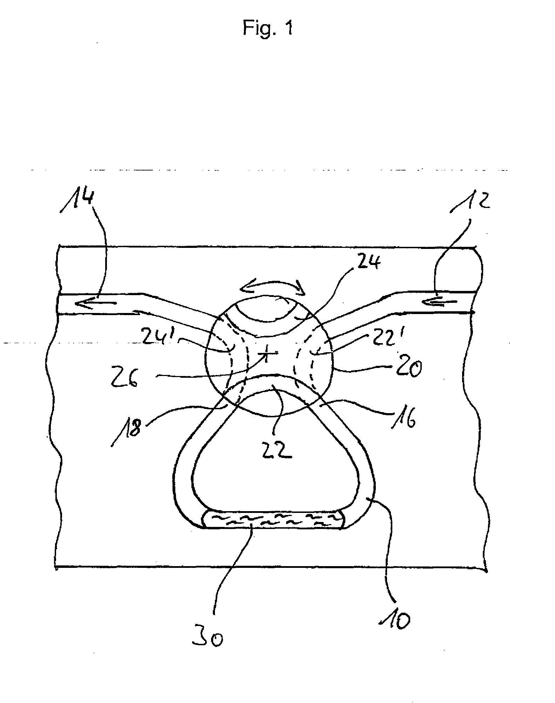

Die in Figur 1 dargestellte mikrofluidischen Struktur zum Positionieren eines Flüssigkeitsvolumens weist mehrere Fluidleitungen, nämlich eine erste Fluidleitung 10, eine zweite Fluidleitung 12 und eine dritte Fluidleitung 14 auf. Alle drei Fluidleitungen enden an einem Drehventil 20, welches einen ersten Durchgang 22 und einen zweiten Durchgang 24 aufweist. Durch Drehen des Drehventils um seine Zentrumsachse 26 können die Fluidleitungen in unterschiedlicher Weise miteinander verbunden bzw. voneinander getrennt werden.

In einer ersten Ventilstellung, in der die Durchgänge 22 und 24 als durchgezogene Linien dargestellt sind, verbindet der erste Durchgang 22 ein erstes Ende 16 der ersten Fluidleitung 10 mit einem zweiten Ende 18 derselben. Die erste Fluidleitung 10 und der erste Durchgang 22 bilden somit ein geschlossenes Volumen, in dem ein Flüssigkeitsplug 30 positioniert ist. Bei einem durchgehend gleichen Querschnitt der ersten Fluidleitung 20 behält der Flüssigkeitsplug 30 seine Position selbst bei Druckveränderungen innerhalb der geschlossenen Leitung bei. Ferner ist gewährleistet, dass keine Flüssigkeit aufgrund von Verdunstungseffekten aus dem geschlossenen System austreten kann.

Eine zweite Ventilsteilung ist durch gestrichelte Darstellung der ersten und zweiten Durchgänge 22' bzw. 24' angedeutet. In dieser Ventilstellung verbindet der zweite Durchgang 22' die erste Fluidleitung 10 mit der zweiten Fluidleitung 12 und der dritte Durchgang 24' die erste Fluidleitung 10 an ihrem zweiten Ende mit der dritten Fluidleitung 14. Der Flüssigkeitsplug 30 kann nun durch Aufbringen einer Druckdifferenz zwischen der zweiten Fluidleitung 12 und der dritten Fluidleitung 14 aus der ersten Fluidleitung 10 herausgedrückt bzw. -gesogen werden.

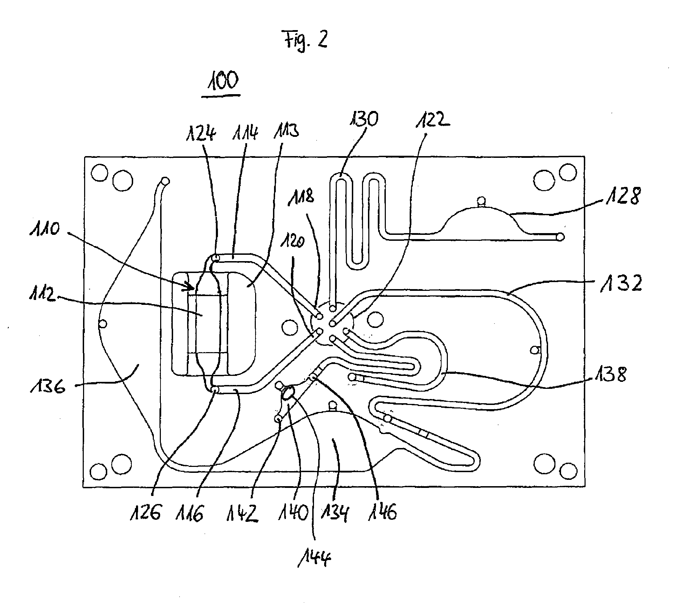

In Figur 2 ist ein MLPA-Mikrofluidikchip 100 mit einer erfindungsgemäßen mikrofluidischen Struktur gezeigt. Der Chip weist im Einzelnen eine erste Fluidleitung 110 mit einer symmetrisch angeordneten Reaktionskammer 112, davor eine erste Anschlussleitung 114 und dahinter eine zweite Anschlussleitung 116 gleicher Dimension auf. Die erste Fluidleitung 110 weist ferner ein erstes Ende 118 und ein zweites Ende 120 auf, an denen die erste Fluidleitung 110 mit demselben Ventil 122 verbunden ist. Das Ventil 122 ist abermals als Drehventil ausgeführt.

Der Mikrofluidikchip weist unmittelbar vor dem Eingang und hinter dem Ausgang der Reaktionskammer 112 jeweils eine Lichtschranke 124 und 126 auf.

Als weitere funktionale Elemente sind ein erstes Reservoir 128, eine mäanderförmige Mischstrecke 130, eine Fluidleitung 132, ein zweites und ein drittes Reservoir 134 und 136, einen Abfalikanal 138 sowie einen Abmesskanal 140 auf.

Die erfindungsgemäße mikrofluidische Struktur kommt in diesem Chip wie folgt zum Einsatz: nachdem ein Lysat mit einem in dem ersten Reservoir 128 bevorrateten RT/pre-PCR-Mix zusammengeführt und in der Mischstrecke 130 gemischt wurde, wird diese Mischung über einen Durchgang (nicht dargestellt) in dem Ventil 122 durch das erste Ende 118 in die erste Fluidleitung 110 eingegeben. Der Flüssigkeitsplug wird durch die erste Anschlussleitung 114 in die Reaktionskammer 112 gefördert. Dies geschieht kontrolliert, in dem nach Detektion des hinteren Endes des Flüssigkeitsplugs mittels der Lichtschranke 124 der Plug für weitere drei Sekunden mittels einer Pumpvorrichtung in die Reaktionskammer hineingedrückt oder -gesogen wird. Danach hält der Flüssigkeitsplug in der Mitte der Reaktionskammer 112 durch Abschalten der Pumpeinrichtung an.

Anschließend wird die erste Fluidleitung durch Verbinden ihres ersten und zweiten Endes mittels eines Durchganges (nicht dargestellt) in dem Ventil 122 kurzgeschlossen. In einem darauf erfolgenden Denaturierungszyklus wird die Probe in der Reaktionskammer 112 erwärmt. Hierfür weist die Reaktionskammer Mittel 113 zum Heizen bzw. zum Anbringen von Elementen einer Heizvorrichtung auf. Während dieser Zeit bleibt die erste Fluidleitung 110 kurzgeschlossen, so dass keine Flüssigkeit durch Verdampfung verloren gehen kann und so dass auf beiden Seiten des Flüssigkeitsplugs derselbe Druck herrscht. Der Plug verharrt deshalb auch bei einem Druckanstieg während der gesamten Reaktionszeit in der Reaktionskammer 112 an derselben Stelle, was den Reaktionsablauf prozessicherer und das Ergebnis reproduzierbarer macht.

Nach Abschluss der Denaturierung wird das zweite Ende 120 der ersten Fluidleitung 110 über einen nicht dargestellten Durchgang in dem Drehventil 122 mit dem Abmesskanal 140 verbunden. Das RT/pre-PCR-Produkt, kurz die Probe, wird aus der Reaktionskammer 112 durch Anlegen einer Druckdifferenz zwischen dem ersten Ende 118 und einem Gasanschluss über eine Membran 142 des Abmesskanals 140 in den Abmesskanal hinein gesogen oder gedrückt, und darin mit einer bestimmten Menge eines zuvor eingebrachten Primers 144 vermischt. Sobald die Probe an der Membran 142 angelangt ist, führt ein weiteres Saugen an diesem Anschluss zu einem signifikanten Druckabfall über der Membran. Bei Erreichen eines Schwellenwertes schaltet die Pumpe automatisch ab, damit die vor der Membran anstehende Flüssigkeit die Membran nicht durchdringt. Im Anschluss daran wird an einen zweiten Gasanschluss über einer zweiten Membran 146 ein Überdruck angelegt, der die überschüssige Probe aus dem Kanal in Richtung des Ventils 122 herausdrückt. Das Ventil 122 schaltet bei diesem Schritt den Ausgang des Abmesskanals 140 auf den Abfallkanal 138, wo die überschüssige Probe entsorgt wird.

In dem Abmesskanal 140 verbleibt eine genau abgemessene Mischung aus dem Primer 144 und dem RT/pre-PCR-Produkt, die anschließend durch Anlegen einer Druckdifferenz zwischen dem Gasanschluss über der Membran 142 und der ersten Fluidleitung 110 bei entsprechender Ventilstellung zurück in die Reaktionskammer 112 gefördert wird. Die Positionierung darin geschieht in der zuvor beschriebenen Weise, jedoch in umgekehrter Richtung, so dass das Flüssigkeitsplugende nun an der Lichtschranke 126 detektiert wird. Anschließend findet in derselben Reaktionskammer 112 eine Primerhybridisierung statt, während die erste Fluidleitung 110 abermals bei entsprechender Ventilstellung kurzgeschlossen ist.

Die erste Fluidleitung 110 wird nach der Reaktion mit der Fluidleitung 132 verbunden, in der ein PCR-Mastermix gespeichert ist, der daraufhin zu der hybridisierten Probe in die Reaktionskammer 112 gesogen wird, wo er mit der Probe vermischt und einem weiteren thermischen Zyklus bei kurzgeschlossener erster Fluidleitung unterzogen wird. Im Anschluss daran wird die Probe durch Anlegen einer Druckdifferenz aus der Reaktionskammer 112 über die Fluidleitung 132 und das erste und zweite Reservoir 134 und 136, in denen sie auf ein gewünschtes Mass verdünnt wird, aus dem MLPA-Chip 100 beispielsweise in einen angeschlossenen Detektionschip (nicht dargestellt) abtransportiert.

Vorstehende Anwendung stellt nur einen beispielhaften Anwendungsfall und zahllosen denkbaren anderen dar.

## Patentansprüche

1. Mikrofluidische Struktur für ein Lab-On-Chip-System zum Positionieren eines Flüssigkeitsvolumens im Lab-on-Chip-System, mit mehreren Fluidleitungen (10, 12, 14), von denen in einer ersten Fluidleitung (10) das Flüssigkeitsvolumen zu positionieren ist, und mit einem Ventil (20), wobei die erste Fluidleitung (10) eine Reaktionskammer einschließt, wobei die Reaktionskammer eine PCR-Kammer ist, **dadurch gekennzeichnet, dass** die erste Fluidleitung (10) ein erstes und ein zweites Ende (16, 18) aufweist, an denen die erste Fluidleitung (10) mit demselben Ventil (20) verbunden ist, wobei das Ventil (20) einen ersten Durchgang (22) aufweist, der geeignet ist, das erste und das zweite Ende (16, 18) der ersten Fluidleitung (10) wahlweise zu verbinden oder diese zu trennen und wobei das Ventil (20) eine Absperrstellung aufweist, in der sowohl das erste als auch das zweite Ende (16, 18) der ersten Fluidleitung (10) verschlossen sind.

2. Mikrofluidische Struktur nach Anspruch 1, **dadurch gekennzeichnet, dass** das Ventil (20) einen zweiten Durchgang (22') aufweist, der geeignet ist, das erste Ende (16) der ersten Fluidleitung (10) wahlweise mit einer zweiten Fluidleitung (12) zu verbinden oder diese zu trennen.

3. Mikrofluidische Struktur nach Anspruch 2, **dadurch gekennzeichnet, dass** das Ventil (20) einen dritten Durchgang (24, 24') aufweist, der relativ zu dem ersten Durchgang (22) so angeordnet ist, dass er das zweite Ende (18) der ersten Fluidleitung (10) mit einer dritten Fluidleitung (14) verbindet während der erste Durchgang (22) das erste Ende (16) der ersten Fluidleitung (10) mit der zweiten Fluidleitung (12) verbindet.

4. Mikrofluidische Struktur nach Anspruch 1, **dadurch gekennzeichnet, dass** die erste Fluidleitung (10) vor und hinter der Reaktionskammer oder dem Reservoir (112) jeweils eine Anschlussleitung gleichen Querschnitts oder gleicher Volumina einschließt.

## Claims

1. Microfluidic structure for a lab-on-chip system for positioning a fluid volume in the lab-on-chip system, having a plurality of fluid lines (10, 12, 14), in a first fluid line (10) of which the fluid volume is to be positioned, and a valve (20), the first fluid line (10) including a reaction chamber, the reaction chamber being a PCR chamber, **characterized in that** the first fluid line (10) has a first and a second end (16, 18), at which the first fluid line (10) is connected to the same valve (20), the valve (20) having a first passage (22), which is suitable for optionally connecting or disconnecting the first and the second end (16, 18) of the first fluid line (10), and the valve (20) having a shut-off position, in which both the first and the second end (16, 18) of the first fluid line (10) are closed.

2. Microfluidic structure according to Claim 1, **characterized in that** the valve (20) has a second passage (22'), which is suitable for optionally connecting or disconnecting the first end (16) of the first fluid line (10) to a second fluid line (12).

3. Microfluidic structure according to Claim 2, **characterized in that** the valve (20) has a third passage (24, 24'), which is arranged in relation to the first passage (22) in such a way that it connects the second end (18) of the first fluid line (10) to a third fluid line (14), while the first passage (22) connects the first end (16) of the first fluid line (10) to the second fluid line (12).

4. Microfluidic structure according to Claim 1, **characterized in that**, upstream and downstream of the reaction chamber or the reservoir (112), the first fluid line (10) respectively includes a connection line of the same cross section or the same volume.

## Revendications

1. Structure microfluide pour système dit de laboratoire sur puce ("lab on chip"), destinée à placer un volume de liquide dans le système "lab on chip" et présentant plusieurs conduits (10, 12, 14) de fluide, le volume de liquide devant être placé dans un premier (10) de ces conduits de fluide, et une soupape (20), le premier conduit (10) de fluide incluant une chambre de réaction, la chambre de réaction étant une chambre à PCR,
**caractérisée en ce que**
le premier conduit (10) de fluide présente une première et une deuxième extrémité (16, 18) sur lesquelles le premier conduit (10) de fluide est relié à la même soupape (20), la soupape (20) présentant un premier passage (22) qui convient pour sélectivement relier ou séparer la première et la deuxième extrémité (16, 18) du premier conduit (10) de fluide, la soupape (20) présentant une position de blocage dans laquelle tant la première que la deuxième extrémité (16, 18) du premier conduit (10) de fluide sont fermées.

2. Structure microfluide selon la revendication 1, **caractérisée en ce que** la soupape (20) présente un deuxième passage (22') qui convient pour relier ou séparer sélectivement la première extrémité (16) du premier conduit (10) de fluide à un deuxième conduit (12) de fluide.

3. Structure microfluide selon la revendication 2, **caractérisée en ce que** la soupape (20) présente un troisième passage (24, 24') disposé par rapport au premier passage (22) de manière à relier la deuxième extrémité (18) du premier conduit (10) de fluide à un troisième conduit (14) de fluide pendant que le premier passage (22) relie la première extrémité (16) du premier conduit (10) de fluide au deuxième conduit (12) de fluide.

4. Structure microfluide selon la revendication 1, **caractérisée en ce qu'**en avant et en arrière de la chambre de réaction ou du réservoir (112), le premier conduit (10) de fluide inclut un conduit de raccordement de même section transversale ou de même volume.
